# EUROPEAN PATENT APPLICATION

(11) **EP 2 154 766 A1**
(43) Date of publication of application: **17.02.2010**
(21) Application number: 07860021.0
(22) Date of filing: 25.12.2007
(51) Int. Cl.: H02K 1/27

(54) **ROTOR AND PERMANENT MAGNET ROTATING ELECTRIC MACHINE**

(30) Priority: 23.03.2007 JP 2007077842
(71) Applicant: Kabushiki Kaisha Toshiba, Minato-ku, Tokyo 105-8001 (JP)
(72) Inventor: TAKABATAKE, Mikio, Minato-ku, Tokyo (JP); TAKAHASHI, Norio, Minato-ku, Tokyo (JP); MOCHIZUKI, Motoyasu, Minato-ku, Tokyo (JP); TOKUMASU, Tadashi, Kanagawa (JP)
(74) Representative: HOFFMANN EITLE
(86) International application number: PCT/JP2007/074792
(87) International publication number: WO 2008/117501

(57) **Abstract**

A permanent-magnet rotating electrical machine 1 of the present invention has a stator 20 with an armature coil 21 and a rotor 10 that is arranged to rotate with a predetermined air gap 23 with respect to the stator. The rotor has a rotor core 12. Permanent magnets 13 are arranged inside the rotor core on an outer circumferential side, or at the surface of the rotor core. The permanent magnets each are divided into a plurality of segments 13-1 and 13-3 in an axial direction along a dividing face 13A. The dividing face and an end face of the permanent magnet 13 facing a circumferential direction form acute angles to define narrowed areas 14-1 and 14-2 to suppress the generation of eddy currents in the permanent magnets, prevent the characteristic deterioration of the permanent magnets, and improve the efficiency of the permanent-magnet rotating electrical machine.

## Description

### TECHNICAL FIELD

The present invention relates to a rotor and a permanent-magnet rotating electrical machine provided with the same.

### BACKGROUND TECHNOLOGY

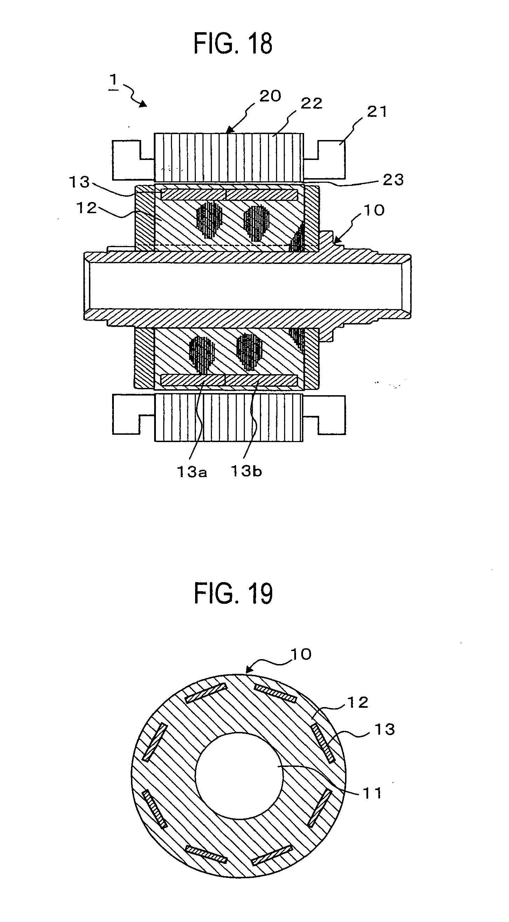

Figures 18 and 19 illustrate a conventional permanent-magnet rotating electrical machine 1 and a rotor 10 incorporated therein. The conventional permanent-magnet rotating electrical machine 1 has the rotor 10 arranged on the inner side thereof and a cylindrical stator 20 arranged along an outer circumference of the rotor with an air gap 23 interposing between them, the stator being composed of a stator coil 21 and a stator core 22 around which the stator coil is wound. The rotor 10 illustrated in Fig. 19 has eight poles and is constituted such that a rotor core 12 arranged around a rotary shaft 11 is provided with eight hollows in each of which a permanent magnet 13 is inserted. The permanent magnet 13 is magnetized in a radial direction of the rotor 10 or in an orthogonal direction to a side (a long side in Fig. 19) of a rectangular section of the permanent magnet 13 facing the air gap 23.

The rotor 10 having the permanent magnets 13 according to the related art has problems mentioned below. The permanent magnet produces linkage flux with flux from the stator core 22, to generate an eddy current on the surface of the permanent magnet. The eddy current deteriorates the efficiency of the permanent-magnet rotating electrical machine 1, increases the temperature of the permanent magnet 13, and deteriorates the performance of the rotating electrical machine 1 due to the temperature increase.

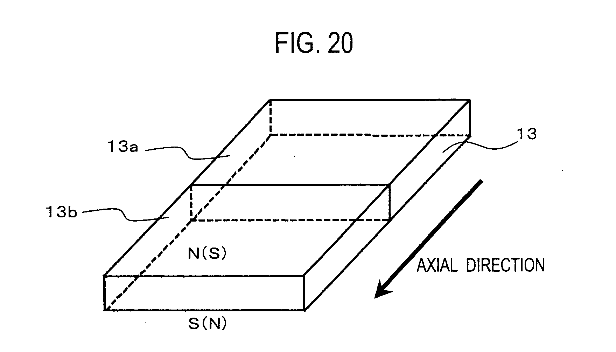

To suppress the eddy current, there is a conventional measure illustrated in Fig. 20 that divides the permanent magnet 13 in an axial or a circumferential direction into a plurality of segments 13a and 13b. For example, Japanese Unexamined Patent Application Publication No. 2005-94845 (Patent Document 1), Japanese Unexamined Patent Application Publication No.2002-359955 (Patent Document 2), and Japanese Unexamined Patent Application Publication No. 2004-96868 (Patent Document 3) are referred to. The measure, however, is insufficient to suppress the eddy current or prevent the problem of deteriorating the performance of the rotating electrical machine.
Patent Document 1: Japanese Unexamined Patent Application Publication No. 2005-94845
Patent Document 2: Japanese Unexamined Patent Application Publication No. 2002-359955
Patent Document 3: Japanese Unexamined Patent Application Publication No. 2004-96868

### DISCLOSURE OF INVENTION

In consideration of the above-mentioned technical problems of the related arts, an object of the present invention is to provide a rotor and a permanent-magnet rotating electrical machine employing the rotor, capable of efficiently suppressing an eddy current generated by a permanent magnet and preventing the temperature increase and characteristic deterioration of the permanent magnet and the efficiency deterioration of the rotating electrical machine.

The present invention provides a rotor in a permanent-magnet rotating electrical machine that has a stator with an armature coil, the rotor that is arranged to rotate with a predetermined air gap with respect to the stator, and permanent magnets arranged at the surface of or inside the rotor. The present invention is **characterized in that** the permanent magnets each are divided into a plurality of segments in an axial direction of the rotor along a dividing face to define narrowed areas to obstruct flows of eddy current generated in the permanent magnet.

The present invention is also characterized by the permanent-magnet rotating electrical machine having the rotor.

According to the present invention, each of the permanent magnets has the divided structure and the dividing face defines the narrowed area to obstruct flows of eddy current. The narrowed area hardly passes an eddy current, suppresses the generation of an eddy current, prevents a temperature increase of the permanent magnet, and prevents a characteristic deterioration of the permanent magnet due to the temperature increase. As a result, the permanent-magnet rotating electrical machine incorporating the rotor secures performance and realizes high efficiency due to a reduction in an eddy current loss.

### BRIEF DESCRIPTION OF DRAWINGS

[Fig. 1] Figure 1 is a sectional view of a permanent-magnet rotating electrical machine according to a first embodiment of the present invention.
[Fig. 2] Figure 2 is a sectional view of a rotor in the permanent-magnet rotating electrical machine according to the first embodiment of the present invention.
[Fig. 3] Figure 3 is a perspective view of a permanent magnet adopted for the rotor of the first embodiment of the present invention.
[Figs. 4A and 4B] Figures 4A and 4B are an explanatory view illustrating a distribution of eddy currents generated in a permanent magnet having a conventional divided-structure and in the permanent magnet having the divided structure according to the first embodiment of the present invention.
[Fig. 5] Figure 5 is a perspective view of a permanent magnet adopted for a rotor according to a second embodiment of the present invention.
[Fig. 6] Figure 6 is a perspective view of a permanent magnet adopted for a rotor according to a third embodiment of the present invention.
[Fig. 7] Figure 7 is a perspective view of a modification of the permanent magnet adopted for the rotor according to the third embodiment of the present invention.
[Fig. 8] Figure 8 is a perspective view of a permanent magnet adopted for a rotor according to a fourth embodiment of the present invention.
[Fig. 9] Figure 9 is a perspective view of a permanent magnet adopted for a rotor according to a fifth embodiment of the present invention.
[Fig. 10] Figure 10 is a perspective view of a permanent magnet adopted for a rotor according to a sixth embodiment of the present invention.
[Figs. 11A and 11B] Figures 11A and 11B are a perspective view of a permanent magnet adopted for a rotor according to a seventh embodiment of the present invention.
[Fig. 12] Figure 12 is a perspective view of a permanent magnet adopted for a rotor according to an eighth embodiment of the present invention.
[Fig. 13] Figure 13 is a perspective view of a permanent magnet adopted for a rotor according to a ninth embodiment of the present invention.
[Fig. 14] Figure 14 is a perspective view of a permanent magnet adopted for a rotor according to a tenth embodiment of the present invention.
[Fig. 15] Figure 15 is a perspective view of a permanent magnet adopted for a rotor according to an eleventh embodiment of the present invention.
[Fig. 16] Figure 16 is a perspective view of a surface permanent-magnet rotating electrical machine according to a twelfth embodiment of the present invention.
[Fig. 17] Figure 17 is a sectional view of a rotor in the surface permanent-magnet rotating electrical machine according to the twelfth embodiment of the present invention.
[Fig. 18] Figure 18 is a sectional view of an interior permanent-magnet rotating electrical machine according to a related art.
[Fig. 19] Figure 19 is a sectional view of a rotor in the interior permanent-magnet rotating electrical machine according to the related art.
[Fig. 20] Figure 20 is a perspective view illustrating a divided permanent magnet adopted for the interior permanent-magnet rotating electrical machine according to the related art.

### BEST MODE OF IMPLEMENTING INVENTION

The embodiments of the present invention will be explained in detail with reference to the drawings.

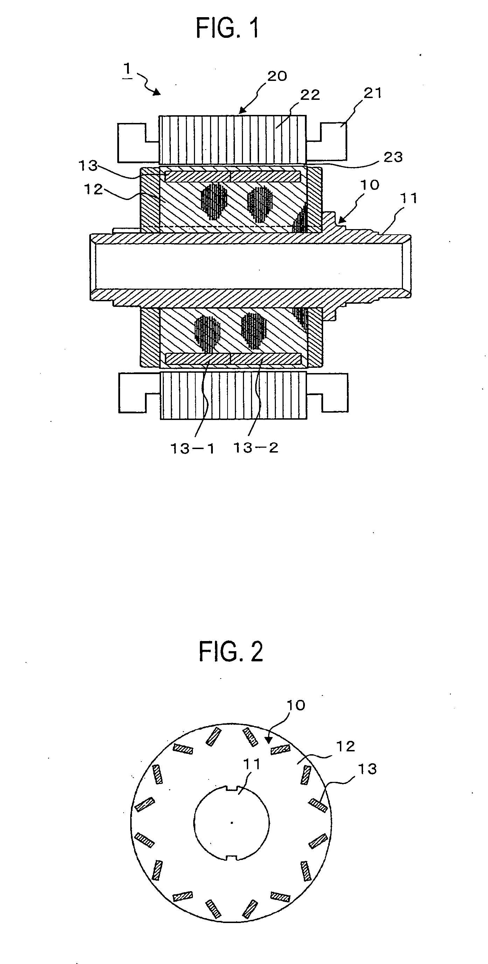

(First embodiment) With reference to Figs. 1 to 5, a rotor 10 and a permanent-magnet rotating electrical machine 1 incorporating the rotor according to the first embodiment of the present invention will be explained. The permanent-magnet rotating electrical machine 1 according to the first embodiment is an interior permanent-magnet rotating electrical machine (IPM). The rotor 10 of the permanent-magnet rotating electrical machine 1 has a rotor core 12. Permanent magnets 13 are embedded in the rotor core 12 on the outer circumferential side thereof. A stator 20 of the permanent-magnet rotating electrical machine 1 is arranged outside the rotor 10, to face the rotor 10 with an air gap 23 interposing between them. The stator 20 is composed of a stator core 22 and a stator coil 21 wound around the stator core 22. The structure of the stator 20 is not particularly limited and can be any standard structure.

When the rotor 10 is of an inner rotor type, it is arranged inside the stator 20 having the stator coil 21. When it is of an outer rotor type, the rotor 10 is arranged on the outer circumferential side of the stator 20. The permanent-magnet rotating electrical machine illustrated in Figs. 1 and 2 is of the inner rotor type with the rotor 10 arranged inside the stator 20.

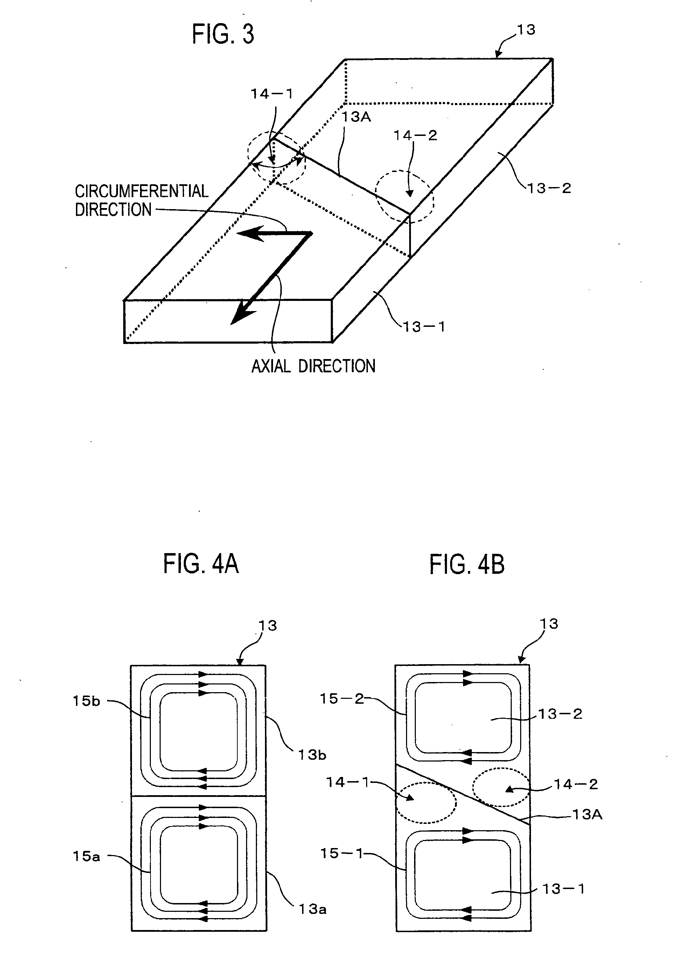

As illustrated in Fig. 3, the permanent magnet 13 is divided into a plurality of segments 13-1 and 13-2 in an axial direction of the rotor 10 along a dividing face 13A that obliquely cuts the axial direction of the rotor 10. The dividing face 13A of the permanent magnet 13 and an end face 13B thereof facing a circumferential direction form an acute angle equal to or smaller than 85 degrees. In Fig. 3, the magnet has a flat plate shape. It may have a curved shape. In practice, each corner of the permanent magnet 13 may be chamfered. Setting the angle between the dividing face 13A and the axial direction to be 85 degrees or smaller is not restrictive. As will be explained later with reference to Figs. 4A and 4B, any angle is adoptable if eddy currents generated in the segments 13-1 and 13-2 do not pass through narrowed areas 14-1 and 14-2 and if heat generation by the eddy currents is suppressed.

Behavior of eddy currents passing through the permanent magnet 13 in the rotor 10 of the permanent-magnet rotating electrical machine 1 of the above-mentioned embodiment will be explained. Figure 4A illustrates eddy currents 15a and 15b pas sing through the permanent magnet 13 divided according to a conventional dividing method and Fig. 4B illustrates eddy currents 15-1 and 15-2 passing through the permanent magnet 13 divided according to the embodiment.

According to the embodiment, the dividing face 13A that axially obliquely extends divides the permanent magnet 13 in the axial direction into a plurality of segments 13-1 and 13-2. The dividing face 13A of the permanent magnet 13 and an end face of the permanent magnet 13 facing a circumferential direction form acute angles to define the narrowed areas 14-1 and 14-2. The narrowed areas 14-1 and 14-2 hardly pass the eddy currents 15-1 and 15-2, thereby suppressing the eddy currents 15-1 and 15-2. This results in reducing a loss and temperature increase due to the eddy currents compared with the conventional rotor. According to actual simulations conducted with an eddy current loss of the conventional case being 100%, the embodiment reduces the loss by about 3% when the angle between the dividing face 13A and the end face of the permanent magnet 13 facing a circumferential direction is 70 degrees and by about 10% when the angle is 50 degrees.

As mentioned above, the rotor 10 and permanent-magnet rotating electrical machine 1 according to the embodiment suppress the generation of eddy currents in the permanent magnet 13, to prevent a temperature increase and characteristic deterioration of the permanent magnet 13 and a performance deterioration of the rotating electrical machine 1. Reducing the eddy current loss results in improving the efficiency of the rotating electrical machine.

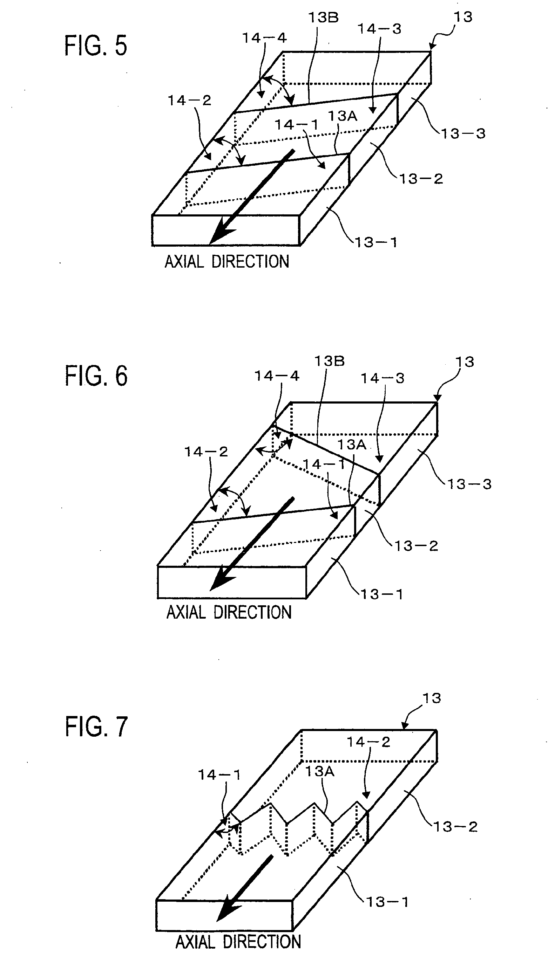

(Second embodiment) With reference to Fig. 5, a permanent-magnet rotating electrical machine and rotor according to the second embodiment of the present invention will be explained. This embodiment is characterized by a dividing method of a permanent magnet 13 arranged in the rotor 10. Except the dividing method of the permanent magnet 13, this embodiment is the same as the first embodiment.

The permanent magnet 13 is divided into three segments 13-1, 13-2, and 13-3 with two dividing faces 13A and 13B that obliquely cross an axial direction. The dividing faces 13A and 13B each are a single plane. The dividing faces 13A and 13B of the permanent magnet 13 and an end face of the permanent magnet 13 facing a circumferential direction form acute angles to define narrowed areas 14-1, 14-2, 14-3, and 14-4.

In the rotor 10 according to the embodiment, the segments 13-1, 13-2, and 13-3 of the permanent magnet 13 have the narrowed areas 14-1 to 14-4 to obstruct eddy currents and suppress the generation of eddy currents. As a result, the rotor and permanent-magnet rotating electrical machine provided with the permanent magnet 13 having the divided structure according to the embodiment prevents the temperature increase of the permanent magnet 13, the characteristic deterioration of the permanent magnet, and the performance deterioration of the rotating electrical machine. Due to a decrease in an eddy current loss, the rotating electrical machine improves efficiency.

According to a modification illustrated in Fig. 6, the permanent magnet 13 is divided with dividing faces 13A and 13B that are oppositely inclined. This also suppresses the generation of eddy currents and prevents the temperature increase of the permanent magnet 13, the characteristic deterioration of the permanent magnet, and the performance deterioration of the rotating electrical machine. Due to a decrease in an eddy current loss, the rotating electrical machine improves efficiency.

(Third embodiment) With reference to Fig. 7, a permanent-magnet rotating electrical machine and rotor according to the third embodiment of the present invention will be explained. The structures of the rotating electrical machine 1 and rotor 10 of this embodiment are similar to those of the first embodiment except a dividing method of the permanent magnet 13.

As illustrated in Fig. 7, the permanent magnet 13 in the rotor 10 according to the embodiment is divided into a plurality of segments 13-1 and 13-2 in an axial direction with a dividing face 13A that consists of a plurality of flat faces repeatedly forming ridges and valleys. The dividing face 13A of the permanent magnet 13 and an end face of the permanent magnet 13 facing a circumferential direction form acute angles to define narrowed areas 14-1 and 14-2.

In the rotor 10 according to the embodiment, the permanent magnet 13 has the narrowed areas 14-1 and 14-2, to suppress the generation of eddy currents and prevent the temperature increase of the permanent magnet 13, the characteristic deterioration of the permanent magnet 13, and the performance deterioration of the rotating electrical machine 1. Due to a decrease in an eddy current loss, the rotating electrical machine improves efficiency.

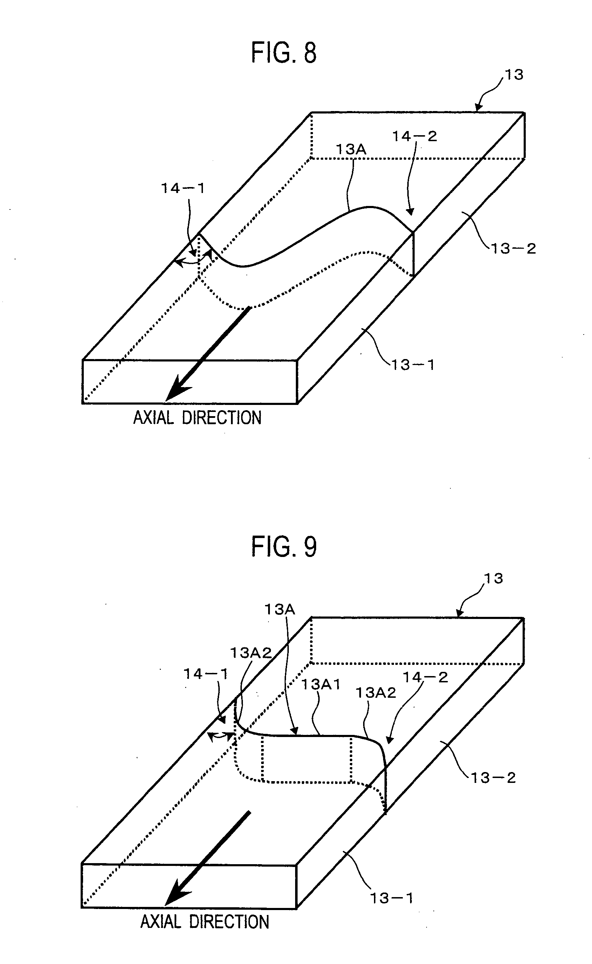

(Fourth embodiment) With reference to Fig. 8, a permanent-magnet rotating electrical machine and rotor according to the fourth embodiment of the present invention will be explained. This embodiment is characterized by a dividing structure of a permanent magnet 13, and except the dividingmethod of the permanent magnet 13, the embodiment is similar to the first embodiment.

As illustrated in Fig. 8, the permanent magnet 13 in the rotor 10 according to the embodiment is divided into a plurality of segments 13-1 and 13-2 in an axial direction with a dividing face 13A that is curved. The dividing face 13A of the permanent magnet 13 and an end face of the permanent magnet 13 facing a circumferential direction form acute angles to define narrowed areas 14-1 and 14-2.

In the rotor 10 according to the embodiment, the permanent magnet 13 has the narrowed areas 14-1 and 14-2, to suppress the generation of eddy currents and prevent the temperature increase of the permanent magnet 13, the characteristic deterioration of the permanent magnet 13, and the performance deterioration of the rotating electrical machine 1. Due to a decrease in an eddy current loss, the rotating electrical machine improves efficiency.

The permanent magnet 13 may have a plurality of curved dividing faces that divide the permanent magnet into three or more segments. This configuration may provide the same effects.

(Fifth embodiment) With reference to Fig. 9, a permanent-magnet rotating electrical machine and rotor according to the fifth embodiment of the present invention will be explained. This embodiment is characterized by a dividing structure of a permanent magnet 13, and except the dividing method of the permanent magnet 13, the embodiment is similar to the first embodiment.

As illustrated in Fig. 9, the permanent magnet 13 in the rotor 10 according to the embodiment is divided into a plurality of segments 13-1 and 13-2 in an axial direction with a dividing face 13A that consists of a flat part 13A1 and curved parts 13A2 at each end of the flat part. The dividing face 13A of the permanent magnet 13 and an end face of the permanent magnet 13 facing a circumferential direction form acute angles to define narrowed areas 14-1 and 14-2.

In the rotor 10 according to the embodiment, the permanent magnet 13 has the narrowed areas 14-1 and 14-2, to suppress the generation of eddy currents and prevent the temperature increase of the permanent magnet 13, the characteristic deterioration of the permanent magnet 13, and the performance deterioration of the rotating electrical machine 1. Due to a decrease in an eddy current loss, the rotating electrical machine improves efficiency.

The permanent magnet 13 according to the embodiment may have a plurality of curved dividing faces that divide the permanent magnet into three or more segments. This configurationmayprovide the same effects.

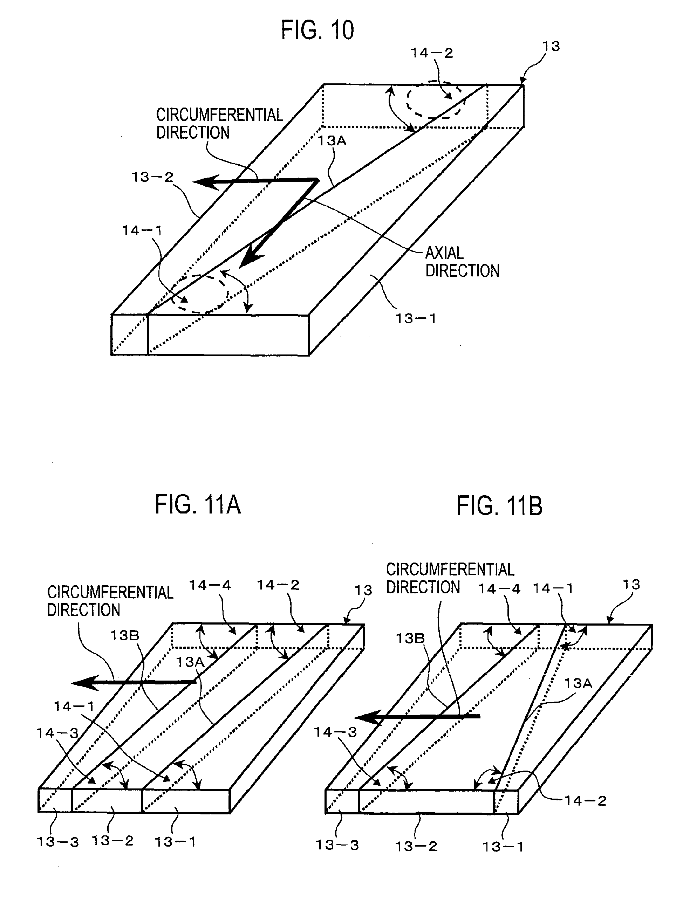

(Sixth embodiment) With reference to Fig. 10, a permanent-magnet rotating electrical machine and rotor according to the sixth embodiment of the present invention will be explained. This embodiment is characterized by a dividing structure of a permanent magnet 13, and except the dividing method of the permanent magnet 13, the embodiment is similar to the first embodiment.

As illustrated in Fig. 10, the permanent magnet 13 in the rotor 10 according to the embodiment is divided into a plurality of segments 13-1 and,13-2 with a dividing face 13A that obliquely intersects a circumferential direction. The dividing face 13A of the permanent magnet 13 and an end face of the permanent magnet 13 facing an axial direction form acute angles to define narrowed areas 14-1 and 14-2.

In the rotor 10 according to the embodiment, the permanent magnet 13 has the narrowed areas 14-1 and 14-2, to suppress the generation of eddy currents and prevent the temperature increase of the permanent magnet 13, the characteristic deterioration of the permanent magnet 13, and the performance deterioration of the rotating electrical machine 1. Due to a decrease in an eddy current loss, the rotating electrical machine improves efficiency.

(Seventh embodiment) With reference to Figs. 11A and 11B, a permanent-magnet rotating electrical machine 1 and rotor 10 according to the seventh embodiment of the present invention will be explained. This embodiment is characterized by a dividing structure of a permanent magnet 13, and except the dividing method of the permanent magnet 13, the embodiment is similar to the first embodiment.

As illustrated in Fig. 11A, the permanent magnet 13 in the rotor 10 according to the embodiment is divided into a plurality of segments 13-1, 13-2, and 13-3 with a plurality of dividing faces 13A and 13B that are oriented in the same direction and obliquely intersect a circumferential direction. The dividing faces 13A and 13B of the permanent magnet 13 and an end face of the permanent magnet 13 facing an axial direction form acute angles to define narrowed areas 14-1, 14-2, 14-3, and 14-4.

In the rotor 10 according to the embodiment, the permanent magnet 13 has the narrowed areas 14-1 to 14-4, to suppress the generation of eddy currents and prevent the temperature increase of the permanent magnet 13, the characteristic deterioration of the permanent magnet 13, and the performance deterioration of the rotating electrical machine 1. Due to a decrease in an eddy current loss, the rotating electrical machine improves efficiency.

In Fig. 11B, the dividing faces 13A and 13B are oppositely inclined. This dividing method provides the same effects as those mentioned above.

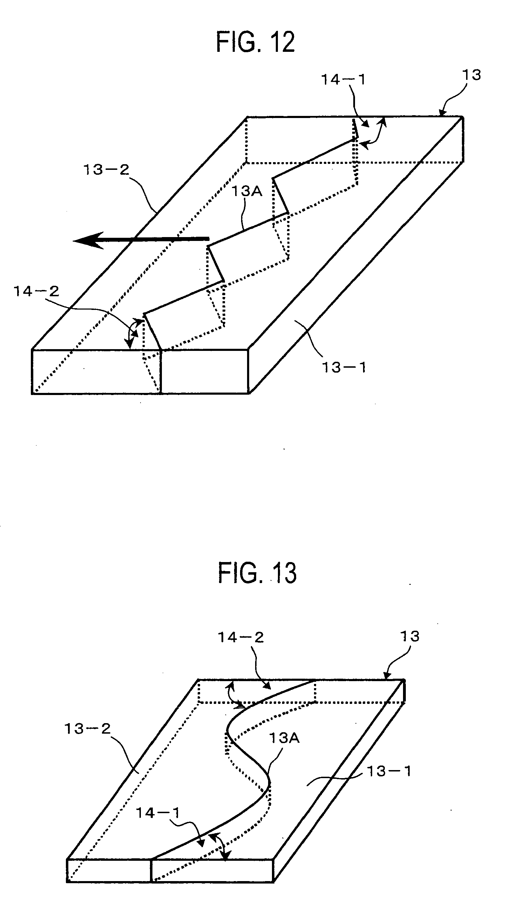

(Eighth embodiment) With reference to Fig. 12, a permanent-magnet rotating electrical machine and rotor according to the eighth embodiment of the present invention will be explained. This embodiment is characterized by a dividing structure of a permanent magnet 13, and except the dividing method of the permanent magnet 13, the embodiment is similar to the first embodiment.

As illustrated in Fig. 12, the permanent magnet 13 in the rotor 10 according to the embodiment is divided into a plurality of segments 13-1 and 13-2 in a circumferential direction with a dividing face 13A that consists of a plurality of flat faces repeatedly forming ridges and valleys. The dividing face 13A of the permanent magnet 13 and an end face of the permanent magnet 13 facing an axial direction form acute angles to define narrowed areas 14-1 and 14-2.

In the rotor 10 according to the embodiment, the permanent magnet 13 has the narrowed areas 14-1 and 14-2, to suppress the generation of eddy currents and prevent the temperature increase of the permanent magnet 13, the characteristic deterioration of the permanent magnet 13, and the performance deterioration of the rotating electrical machine 1. Due to a decrease in an eddy current loss, the rotating electrical machine improves efficiency.

(Ninth embodiment) With reference to Fig. 13, a permanent-magnet rotating electrical machine and rotor according to the ninth embodiment of the present invention will be explained. This embodiment is characterized by a dividing structure of a permanent magnet 13, and except the dividing method of the permanent magnet 13, the embodiment is similar to the first embodiment.

As illustrated in Fig. 13, the permanent magnet 13 in the rotor 10 according to the embodiment is divided into a plurality of segments 13-1 and 13-2 in a circumferential direction with a dividing face 13A that is curved. The dividing face 13A of the permanent magnet 13 and an end face of the permanent magnet 13 facing an axial direction form acute angles to define narrowed areas 14-1 and 14-2.

In the rotor 10 according to the embodiment, the permanent magnet 13 has the narrowed areas 14-1 and 14-2, to suppress the generation of eddy currents and prevent the temperature increase of the permanent magnet 13, the characteristic deterioration of the permanent magnet 13, and the performance deterioration of the rotating electrical machine 1. Due to a decrease in an eddy current loss, the rotating electrical machine improves efficiency.

The permanent magnet 13 may have a plurality of curved dividing faces that divide the permanent magnet into three or more segments. This configuration provides the same effects.

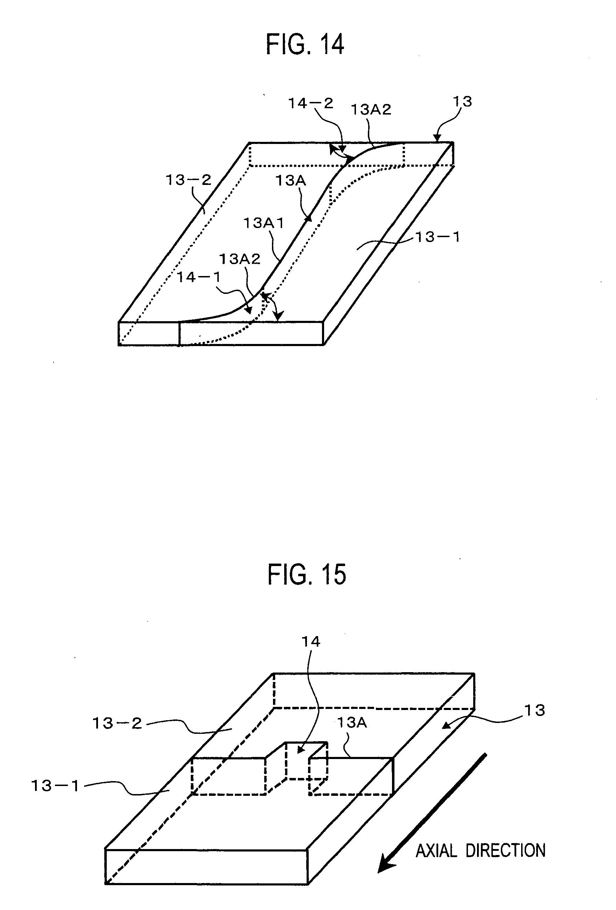

(Tenth embodiment) With reference to Fig. 14, a permanent-magnet rotating electrical machine and rotor according to the tenth embodiment of the present invention will be explained. This embodiment is characterized by a dividing structure of a permanent magnet 13, and except the dividingmethod of the permanent magnet 13, the embodiment is similar to the first embodiment.

As illustrated in Fig. 14, the permanent magnet 13 in the rotor 10 according to the embodiment is divided into a plurality of segments 13-1 and 13-2 in a circumferential direction with a dividing face 13A that consists of a flat part 13A1 and curved parts 13A2 at each end of the flat part. The dividing face 13A of the permanent magnet 13 and an end face of the permanent magnet 13 facing an axial direction form acute angles to define narrowed areas 14-1 and 14-2.

In the rotor 10 according to the embodiment, the permanent magnet 13 has the narrowed areas 14-1 and 14-2, to suppress the generation of eddy currents and prevent the temperature increase of the permanent magnet 13, the characteristic deterioration of the permanent magnet 13, and the performance deterioration of the rotating electrical machine 1. Due to a decrease in an eddy current loss, the rotating electrical machine improves efficiency.

The permanent magnet 13 according to the embodiment may have a plurality of curved dividing faces that divide the permanent magnet into three or more segments. This configuration provides the same effects.

(Eleventh embodiment) With reference to Fig. 15, a permanent-magnet rotating electrical machine and rotor according to the eleventh embodiment of the present invention will be explained. This embodiment is characterized by a dividing structure of a permanent magnet 13, and except the dividing method of the permanent magnet 13, the embodiment is similar to the first embodiment.

As illustrated in Fig. 15, the permanent magnet 13 in the rotor 10 according to the embodiment is divided into a plurality of segments 13-1 and 13-2 in an axial direction with a dividing face 13A that has a recess to define a narrowed area 14.

In the rotor 10 according to the embodiment, the permanent magnet 13 has the narrowed area 14, to suppress the generation of eddy currents and prevent the temperature increase of the permanent magnet 13, the characteristic deterioration of the permanent magnet 13, and the performance deterioration of the rotating electrical machine 1. Due to a decrease in an eddy current loss, the rotating electrical machine improves efficiency.

The permanent magnet 13 according to the embodiment may have a plurality of dividing faces that divide the permanent magnet into three or more segments. This configuration provides the same effects.

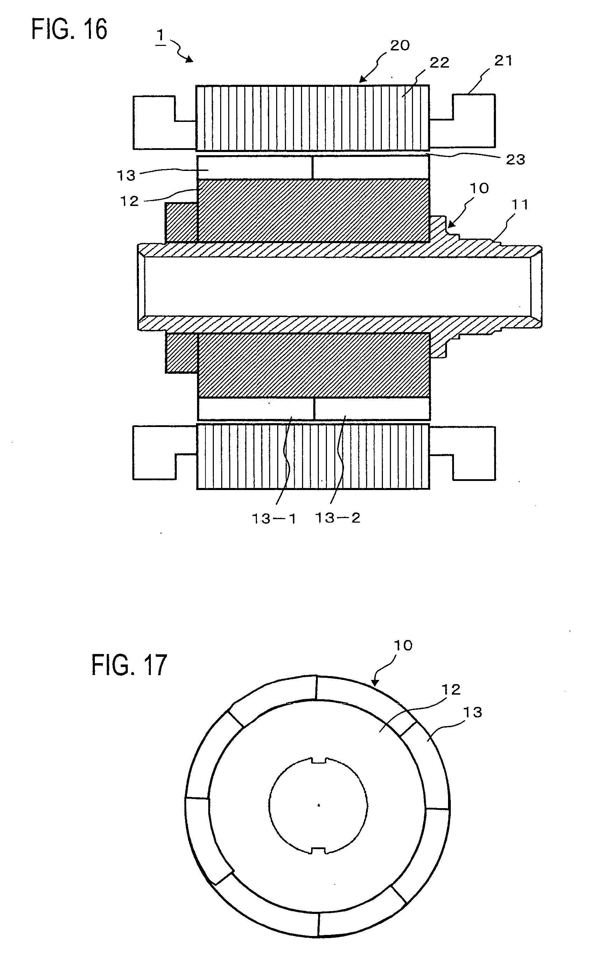

(Twelfth embodiment) The above-mentioned embodiments have been explained with reference to interior permanent-magnet rotating electrical machines. The present invention is also applicable to a surface permanent-magnet rotating electrical machine 1 and rotor 10 having structures illustrated in Figs. 16 and 17. In the rotor 10 illustrated in Fig. 17, each permanent magnet 13 serving as a surface magnet may be divided into segments in an axial direction like the first to fifth and eleventh embodiments, or in a circumferential direction like the sixth to tenth embodiments, to define narrowed areas in the divided segments, the narrowed areas suppressing the generation of eddy currents and providing effects similar to those provided by the above-mentioned embodiments. In Figs. 16 and 17, elements common to those of Figs. 1 and 2 are represented with like reference marks.

## Claims

1. A rotor in a permanent-magnet rotating electrical machine that has a stator with an armature coil, the rotor that is arranged to rotate with a predetermined air gap with respect to the stator, and permanent magnets arranged at the surface of or inside the rotor, **characterized in that**:
the permanent magnets each are divided into a plurality of segments in an axial direction of the rotor along a dividing face to define narrowed areas to obstruct flows of eddy current generated in the permanent magnet.

2. The rotor as set forth in claim 1, **characterized in that** the dividing face of the permanent magnet consists of a flat face.

3. The rotor as set forth in claim 1, **characterized in that** the dividing face of the permanent magnet consists of a curved face.

4. The rotor as set forth in claim 1, **characterized in that** the dividing face of the permanent magnet consists of flat and curved faces.

5. The rotor as set forth in claim 1, **characterized in that** the dividing face of the permanent magnet consists of an irregular face.

6. A rotor in a permanent-magnet rotating electrical machine that has a stator with an armature coil, the rotor that is arranged to rotate with a predetermined air gap with respect to the stator, and permanent magnets arranged at the surface of or inside the rotor, **characterized in that**:
the permanent magnets each are divided into a plurality of segments in a circumferential direction of the rotor along a dividing face to define acutely-angled ends to obstruct flows of eddy current generated in the permanent magnet.

7. The rotor as set forth in claim 6, **characterized in that** the dividing face of the permanent magnet consists of a flat face.

8. The rotor as set forth in claim 6, **characterized in that** the dividing face of the permanent magnet consists of a curved face.

9. The rotor as set forth in claim 6, **characterized in that** the dividing face of the permanent magnet consists of flat and curved faces.

10. A permanent-magnet rotating electrical machine comprising the rotor as set forth in any one of claims 1 to 9.
